# EUROPEAN PATENT APPLICATION

(11) **EP 3 822 410 A1**
(43) Date of publication of application: **19.05.2021**
(21) Application number: 19208623.9
(22) Date of filing: 12.11.2019
(51) Int. Cl.: D21H 11/18, C08B 11/12, C08L 1/28, D21H 11/20, D21H 27/10

(54) **METHOD OF PRODUCING A SHEET COMPRISING CHEMICALLY MODIFIED CELLULOSE FIBRES**

(71) Applicant: BillerudKorsnäs AB, 169 27 Solna (SE)
(72) Inventor: NADERI, Ali, 732 33 Arboga (SE); LARSSON, Johan, 805 98 Gävle (SE)
(74) Representative: Kransell & Wennborg KB

(57) **Abstract**

There is provided a method of producing a sheet comprising chemically modified cellulose fibres, wherein the method comprises:
a. providing chemically modified cellulose fibres comprising a chargeable moiety and having a water retention value according to SCAN-C 62:00 of 15-40 g/g, more preferably 19-40 g/g;
b. forming a fibre web by dewatering a slurry comprising the chemically modified cellulose fibres on a forming wire; and
c. drying the fibre web to obtain the sheet,
with the proviso that no carboxymethyl cellulose (CMC) is added to the chemically modified cellulose fibres during or prior to step b.

## Description

### TECHNICAL FIELD

The present disclosure relates to the production of cellulose-based sheets having barrier properties.

### BACKGROUND

Recent advances in science and technology has created an environmental consciousness that shifted the societal and industrial focus towards green products and sustainable processes. This new approach was further fuelled by the scarcity of oil reserves, which gave an incentive to replace oil-based polymeric materials with the renewable and biodegradable materials. On the other hand, considering the fact that it was the excellent material properties and good processability of oil-based polymeric materials that established their market position, it is foreseeable that completely replacing these materials with their natural counterparts will not be an easy task.

Good barrier properties and processability, together with resistance to different environments and transparency are just some of the desired qualities for commonly used packaging materials, and oil-based polymeric materials indeed provide these qualities to a sufficient extent. To replace oil-based materials with renewable and bio-based materials, it is desirable to reach at least similar performance levels, and at a similar cost. One way to readily achieve this goal is to use naturally abundant materials with existing industrially established large-scale production and processing protocols. In this respect, packaging grade papers are very promising candidates to facilitate this transformation from non-renewable to renewable while keeping a similar cost, since it is made of naturally occurring cellulose-rich fibres in already existing processes in the pulp and paper industry.

Besides being one of the most abundant biopolymers on Earth, cellulose attracts considerable attention due to its strength and stiffness combined with low weight, biodegradability and renewability. One of the promising new material streams of cellulose is the production and use of cellulose nanofibrils (CNFs) prepared from wood biomass. CNFs have desired properties, such as providing strong and transparent barrier films for applications such as packaging. An important feature of CNFs is their hydrophilicity, which is a great advantage for processing in aqueous media. However, this affinity for water of CNFs is also the reason for very long dewatering times, or energy demanding evaporation protocols, which to a large extent is what inhibits the feasible production of dry CNF-based materials on an industrial scale.

### SUMMARY

An objective of the present disclosure is thus to provide a method of efficient and industrially feasible production of cellulose-based barriers.

The inventor has found that the objective can be met by introducing chargeable groups in cellulose fibres to a certain degree without breaking up the fibre structure to the extent that (substantial) fibrillation occurs.

There is thus provided a method of producing a sheet comprising chemically modified cellulose fibres, wherein the method comprises:
- providing chemically modified cellulose fibres comprising a chargeable moiety and having a water retention value according to SCAN-C 62:00 of 15-40 g/g, more preferably 19-40 g/g;
- forming a fibre web by dewatering a slurry comprising the chemically modified cellulose fibres on a forming wire ; and
- drying the fibre web to obtain the sheet,
   with the proviso that no carboxymethyl cellulose (CMC) is added to the chemically modified cellulose fibres during or prior to step b.

There is also provided a sheet formed according to the above method.

### DESCRIPTION

The present disclosure provides a method for producing a sheet comprising chemically modified cellulose fibres, wherein the method comprises:
a. providing chemically modified cellulose fibres comprising a chargeable moiety and having a water retention value according to SCAN-C 62:00 of 15-40 g/g, more preferably 19-40 g/g;
b. forming a fibre web by dewatering a slurry comprising the chemically modified cellulose fibres on a forming wire; and
c. drying the fibre web to obtain the sheet,
with the proviso that no carboxymethyl cellulose is added to the chemically modified cellulose fibres during or prior to step b.

Steps b) and c) are suitably carried out on a full-scale paper machine, i.e. a paper machine running at a speed of at least 300 m/min and having a trim width of at least 1500 mm, such as at least 3000 mm. Consequently, only a very limited period of time is available for the completion of steps b) and c) of the process.

Step c) may be carried out in the drying section of a paper machine. Consequently, step c) may be carried out by means of heated cylinders, such as steam-heated cylinders, and/or contactless drying, preferably using hot air and/or infrared radiation. Step c) may further comprise a step of calendering the fibre web, preferably conducted after the drying of the fibre web.

Upstream the drying section of the paper machine, there is typically arranged a press section. In such case, pressing is conducted between steps b) and c). The pressing section may comprise several press nips. The dry matter content of the web after the press section may be at least 40%.

The chemically modified fibres preferably have undergone a chemical treatment selected from the group consisting of oxidation, alkoxylation, phosphorylation, sulfonation and sulfoethylation to introduce the chargeable moiety. The oxidation may be TEMPO-oxidation or periodate oxidation followed by chlorite oxidation. The alkoxylation is preferably carboxymethylation.

In a preferred embodiment, the chemical modification is selected from TEMPO-oxidation, alkoxylation, phosphorylation sulfonation and sulfoethylation. In such an embodiment, periodate oxidation and other ways of breaking the C₂-C₃ of D-glucose units are excluded.

The sheet has a grammage according to ISO 536:2012 of 5-100 g/m², such as 5-70 g/m², such as 10-70 g/m², such as 10-60 g/m², such as 35-60 g/m², such as 42-60 g/m², preferably 45-60 g/m², more preferably 50-60 g/m².

In one embodiment, a crosslinking agent is added in or after step b. The crosslinking agent may be a divalent cation, preferably a divalent metal ion.

The crosslinking agent is preferably added as an aqueous composition.

The addition of the aqueous composition may be carried out by means of a size press or a film press. Alternatively, the aqueous composition may be sprayed onto the fibre web.

If the aqueous composition is added by means of a size press or film press, is typically has a viscosity of 10-1000 mPas, preferably 10-300 mPas, when measured as dynamic viscosity with a Brookfield rotational viscometer using spindle no.4 at 100 rpm and 25 °C according to the Brookfield instruction sheet.

According to another embodiment, a curtain coater or a direct rod coater is used for the application of the aqueous composition. In such case, the viscosity of the aqueous composition is typically 100-800 mPas when measured as dynamic viscosity with a Brookfield rotational viscometer using spindle no.4 at 100 rpm and 25 °C according to the Brookfield instruction sheet.

According to yet another embodiment, a blade coater is used for the application of the aqueous composition. In such case, the viscosity of the aqueous composition is typically 400-1500 mPas when measured as dynamic viscosity with a Brookfield rotational viscometer using spindle no.4 at 100 rpm and 25 °C according to the Brookfield instruction sheet.

To facilitate the application (and to obtain the desired viscosity), the aqueous composition may comprise a polymer, such as starch, carboxymethyl cellulose (CMC), polyvinyl alcohol (PVOH) or microfibrillated cellulose (MFC). In addition to the polymer, the composition may comprise a rheology modifier.

In the context of the present disclosure, MFC means nano-scale cellulose particle fibres or fibrils with at least one dimension less than 100 nm. MFC comprises partly or totally fibrillated cellulose or lignocellulose fibres. The liberated fibrils have a diameter less than 100 nm, whereas the actual fibril diameter or particle size distribution and/or aspect ratio (length/width) depends on the source and the manufacturing methods. Depending on the source and the manufacturing process, the length of the fibrils can vary from around 1 to more than 10 micrometers. A coarse MFC grade might contain a substantial fraction of fibrillated fibres, i.e. protruding fibrils from the tracheid (cellulose fibre), and with a certain amount of fibrils liberated from the tracheid. There are different synonyms for MFC such as cellulose microfibrils, fibrillated cellulose, nanofibrillated cellulose (NFC), fibril aggregates, nanoscale cellulose fibrils, cellulose nanofibres, cellulose nanofibrils (CNF), cellulose microfibres (CMF), cellulose fibrils, microfibrillar cellulose, microfibril aggregrates and cellulose microfibril aggregates.

Carboxymethyl cellulose (CMC) is a cellulose derivative with carboxymethyl groups (-CH2-COOH) bound to some of the hydroxyl groups of the glucopyranose monomers that make up the cellulose backbone. It is often used as its sodium salt, sodium carboxymethyl cellulose. It is a non-fibrous polymer and, thus, not the same as carboxymethylated cellulose fibres or carboxymethylated cellulose fibrils.

When the crosslinking agent is a divalent cation, its concentration in the aqueous composition is preferably below 100 mM (e.g 0.1-90 mM), such as 50 mM or lower (e.g. 0.1-50 mM, such as 0.1-40 mM, such as 0.1-30 mM, such as 0.1-20 mM, such as 0.1-10 mM).

The divalent cation is preferably selected from the group consisting of Zn²⁺, Ca²⁺, Cu²⁺ and Mg²⁺. Zn²⁺ and Ca²⁺ are particularly preferred.

Alternatively, the chemically modified cellulose fibres have undergone a reaction introducing at least one quaternary amine. In such case, a crosslinker that is a multivalent anion may be used. Examples of multivalent anions are phosphate ions or polycarboxylate ions. The introduction of quaternary amines is preferably conducted via a compound that both contains a group reacting with hydroxyl groups to form covalent bonds as well as a quaternary ammonium group. The introduction may also be conducted via a compound that both contains a group reacting with hydroxyl groups to form covalent bonds and a group that can further react to attach an amine. Preferably, the group reacting with hydroxyl groups is selected from any of epoxy, halohydrin capable of forming epoxy, active halogen, isocyanate, active vinyl or methylol. Examples of compounds bearing a group reacting with hydroxyl groups to form covalent bonds as well as a quaternary ammonium group are 2,3-epoxypropyl trimethylammonium chloride (EPTMAC), chlorocholine chloride (ClChCl), glycidyl trimethylammonium chloride and 3-chloro-2-hydroxypropyl trimethyl ammonium chloride. It may be advantageous to crosslink cationic amine-functional fibres since such functionalization chemistry is readily available on an industrial scale.

The chemically modified fibres preferably have a charge density measured according to SCAN-CM 65:02 of 1200-2400 µeq/g, such as 1200-1800 µeq/g.

The chemically modified fibres are preferably prepared from pulp of virgin wood fibres, preferably never-dried wood fibres, preferably bleached wood fibres, such as fibres comprising less than 10 wt.% (dry) lignin, such as dissolving pulp.

Accordingly, in one embodiment the method for producing a sheet of chemically modified cellulose fibres comprises the steps of:
- chemically modifying virgin wood fibres to obtain chemically modified cellulose fibres comprising a chargeable moiety and having a water retention value according to SCAN-C 62:00 of 15-40 g/g, more preferably 19-40 g/g;
- forming a fibre web by dewatering a slurry comprising the chemically modified cellulose fibres on a forming wire, preferably on a paper machine;
- optionally, pressing the fibre web, suitably in a press section of a paper machine;
- optionally, crosslinking the fibre web with a crosslinking agent comprising a multivalent ion
- drying the fibre web to obtain the sheet, preferably in the drying section of a paper machine; and
- optionally, calendering the sheet.

The sheet produced by the method of the present disclosure is typically an oxygen barrier, preferably exhibiting a normalized oxygen transmission rate (OTRₘᵢₗ) of less than 50 ml m⁻² d⁻¹ bar⁻¹ at 80% RH according to standards ASTM D3985 and F1927. Normalization to a thickness of 25 µm is conducted by determination of thickness of the sheet with scanning electron microscope (SEM), dividing the thickness with 25 (µm), and multiplying with obtained OTR-value from the measurement.

Preferably, no base that causes fibrillation of the chemically modified fibres is added to the fibre web.

### EXAMPLES

### Example 1

### Carboxymethylation of fibres

A commercial never-dried TCF-bleached sulfite dissolving pulp (trade name: Dissolving Plus) from a mixture of Norway spruce (60%) and Scottish pine (40%) was obtained from Domsjö Fabriker (Domsjö Mill, Sweden). Using the method described in Naderi et al. ("Enhancing the properties of carboxymethylated nanofibrillated cellulose by inclusion of water in the pre-treatment process" Nordic Pulp & Paper Research Journal 31(3): 372-378 (2016)), the dissolving pulps were modified into carboxymethylated fibres with degrees of substitution (DS) in the range of 0.05-0.3.

### Example 2

### Production of CNF

The carboxymethylated pulps produced according to Ex. 1 were dispersed in water (to a consistency of 0.5 wt%) by a propeller mixer for one hour. The suspensions were thereafter microfluidized (Microfluidizer M-110EH, Microfluidics Corp., USA) by passing the slurries one time at 1500 bar through two Z-shaped chambers with diameters of 200 µm and 100 µm, respectively.

### Example 3a

### Preparation of CNF films

Suspensions of carboxymethylated CNF (0.1 wt%) with different D.S. (0.05, 0.15 and 0.30) were produced by mixing CNF produced according to Ex. 2 with water using a magnetic stirrer for about 18 h at 750 rpm. Films were, thereafter, prepared by vacuum filtration of the suspension using 0.65 µm DVPP filters (supplied by Millipore), followed by drying, in constrained form, in an oven for seven hours at 50 °C to a grammage of 30 g/m².

### Example 3b

### Preparation of pulp films

Suspensions of carboxymethylated pulps (0.3 wt%) with different D.S. (0.05, 0.15 and 0.30) were produced by mixing pulp produced according to Ex. 1 with water using a magnetic stirrer for about 18 h at 750 rpm. Films were thereafter, prepared by vacuum filtration of the suspension using 0.65 µm DVPP filters (supplied by Millipore), followed by drying, in constrained form, in an oven for seven hours at 50 °C to a grammage of 10 and 30 g/m².

### Example 3c

### Crosslinking of pulp films using Ca²⁺ ions

A film produced according to Ex. 3b with a grammage of 30 g/m² was dipped for 5 seconds in a solution containing calcium chloride dihydrate (1 mM) acting as a crosslinker, and the crosslinked film was thereafter dried (50 °C; 4 h). No washing was performed between the dipping and the drying.

### Example 4

### Evaluation of dewatering rate

The relative speed of dewatering of the carboxymethylated pulps and corresponding CNFs were studied based on the following. 120 grams of 0.03 wt% suspensions based on carboxymethylated pulps and corresponding CNFs were prepared by diluting the concentrated systems with deionized water and mixing overnight. The time for removing the excess water of the different systems by vacuum filtration over a 0.65 µm DVPP filters (supplied by Millipore) was recorded. For the carboxymethylated pulp the dewatering time is 13 minutes, and for the corresponding CNF the filtration time is 80 minutes.

### Example 5

### Oxygen transmission rate

The transmission rate (OTR) was measured on 5 cm² samples using a MOCON OX-TRAN 2/21 according to the ASTM D3985 and ASTM F1927 standards. The OTR measurements were performed at 23° C and 50% RH or 80% RH, using the same relative humidity on both sides of the sample.

**Table 1. The OTR of films based on carboxymethylated pulps and corresponding CNFs, at different degree of substitution (DS) and grammages. The thickness of the 30 g/m² films was 25±2 µm.**

| | Particle type | D.S. | Estimated charge density* (µeq/g) | Estimated WRV* (g/g) | Grammage (g/m²) | OTR (50% RH) (ml m⁻² d⁻¹ bar⁻¹) | OTR (80% RH) (ml m⁻² d⁻¹ bar⁻¹) |
|---|---|---|---|---|---|---|---|
| Ex. 3a | CNF | 0.05 | 300 | - | 30 | 4 | 36 |
| Ex. 3a | CNF | 0.15 | 900 | - | 30 | 7 | 88 |
| Ex. 3a | CNF | 0.3 | 1800 | - | 30 | 2 | 94 |
| Ex. 3b | Pulp | 0.05 | 300 | 3 | 30 | Over range | N.M. |
| Ex. 3b | Pulp | 0.15 | 900 | <15 | 30 | Over range | N.M. |
| Ex. 3b | Pulp | 0.3 | 1800 | 24 | 10 | 2 | 116 |
| Ex. 3b | Pulp | 0.3 | 1800 | 24 | 30 | 2 | 51 |
| Ex. 3c | Pulp (crosslinked) | 0.3 | 1800 | 24 | 30 | 2 | 30 |

| | | | | | | | |
|---|---|---|---|---|---|---|---|
| N.M. means not measured * The estimate is partly based on measurements showing that D.S. = 0.2 corresponds to 1200 µeq/g and D.S. = 0.4 corresponds to 2400 µeq/g. ** The estimate is partly based on measurements showing that D.S. = 0.2 corresponds to 19 g/g and D.S. = 0.3 corresponds to 24 g/g. | | | | | | | |

## Claims

1. A method of producing a sheet comprising chemically modified cellulose fibres, wherein the method comprises:
a. providing chemically modified cellulose fibres comprising a chargeable moiety and having a water retention value according to SCAN-C 62:00 of 15-40 g/g, more preferably 19-40 g/g;
b. forming a fibre web by dewatering a slurry comprising the chemically modified cellulose fibres on a forming wire; and
c. drying the fibre web to obtain the sheet,
with the proviso that no carboxymethyl cellulose (CMC) is added to the chemically modified cellulose fibres during or prior to step b.

2. The method according to claim 1, wherein the water retention value is below 35 g/g, preferably below 30 g/g.

3. The method according to claim 1, wherein the charge density measured according to SCAN-CM 65:02 of the chemically modified cellulose fibres is 1200-2400 µeq/g, such as 1200-1800 µeq/g.

4. The method according to any one of the preceding claims further comprising adding a crosslinking agent comprising a divalent metal ion during or after step b, which divalent metal ion may be selected from the group consisting of Zn²⁺, Ca²⁺ and Mg²⁺.

5. The method according to any one of the preceding claims, wherein the chemically modified cellulose fibres constitutes at least 90 wt.% (dry) of the sheet, such as at least 95 wt.% (dry) of the sheet.

6. The method according to any one of the preceding claims, wherein the chemically modified cellulose fibres have undergone oxidation, alkoxylation, phosphorylation, sulfoethylation or sulfonation to introduce the chargeable moiety.

7. The method according to claim 6, wherein carboxymethylation has been carried out to a degree of substitution (DS) of 0.2-0.4.

8. The method according to any one of the preceding claims, wherein the sheet has a grammage according to ISO 536:2012 of 5-100 g/m², such as 5-70 g/m², such as 10-70 g/m², such as 10-60 g/m², such as 35-60 g/m², such as 42-60 g/m², preferably 45-60 g/m², more preferably 50-60 g/m².

9. The method according to any one of the preceding claims, wherein step c is preceded by a step of pressing the fibre web.

10. The method according to any one of the preceding claims, wherein the chemically modified cellulose fibres were prepared by chemically modifying bleached wood fibres.

11. The method according to any one of the preceding claims, wherein the chemically modified cellulose fibres were prepared by chemically modifying fibres comprising less than 10 wt.% (dry) lignin

12. The method according to any one of the preceding claims, wherein the chemically modified cellulose fibres were prepared by chemically modifying bleached fibres of dissolving pulp.

13. A sheet produced according to the method of any one of claims 1-12.

14. The sheet according to claim 13, wherein the normalized oxygen transmission rate (OTRₘᵢₗ) of the sheet is less than 50 ml m⁻² d⁻¹ bar⁻¹ at 80% RH according to standards ASTM D3985 and F1927.

15. The sheet according to claim 13 or 14, wherein the normalized oxygen transmission rate (OTRₘᵢₗ) of the sheet is less than 4 ml m⁻² d⁻¹ bar⁻¹ at 50% RH according to standards ASTM D3985 and F1927.
